# EUROPÄISCHE PATENTSCHRIFT

(11) **EP 3 865 788 B1**
(45) Veröffentlichungstag und Bekanntmachung des Hinweises auf die Patenterteilung: **13.08.2025**
(21) Anmeldenummer: 21153811.1
(22) Anmeldetag: 27.01.2021
(51) Int. Cl.: F25B 9/00, C09K 5/04, C09K 5/06, F25B 40/02, F25B 49/02

(54) **KÜHLEINRICHTUNG, VERFAHREN ZUM BETRIEB EINER KÜHLEINRICHTUNG UND PRÜFKAMMER**
COOLING DEVICE, METHOD FOR OPERATING A COOLING DEVICE, AND TESTING CHAMBER
DISPOSITIF DE REFROIDISSEMENT, PROCÉDÉ D'OPÉRATION D'UN DISPOSITIF DE REFROIDISSEMENT, ET CHAMBRE D'ESSAI

(30) Priorität: 11.02.2020 DE 102020103486
(43) Veröffentlichungstag der Anmeldung: 18.08.2021
(73) Patentinhaber: Weiss Technik GmbH, 35447 Reiskirchen (DE)
(72) Erfinder: AYDIN, Murat, 35390 Giessen (DE); GÖPFERT, Tobias, 01159 Dresden (DE); HAACK, Christian, 35037 Marburg (DE)
(74) Vertreter: advotec.

(56) Entgegenhaltungen:
- WO-A1-2019/048250
- US-A- 3 872 682
- SOBIERAJ MICHAL ET AL: "High phase-separation efficiency auto-cascade system working with a blend of carbon dioxide for low-temperature isothermal refrigeration", APPLIED THERMAL ENGINEERING, PERGAMON, OXFORD, GB, vol. 161, 18 July 2019 (2019-07-18), XP085817124, ISSN: 1359-4311, [retrieved on 20190718], DOI: 10.1016/J.APPLTHERMALENG.2019.114149

## Beschreibung

Die Erfindung betrifft ein Verfahren zum Betrieb einer Kühleinrichtung, eine Kühleinrichtung sowie eine Prüfkammer mit einer Kühleinrichtung, wobei mittels der Kühleinrichtung mit einem Kühlkreislauf mit einem Kältemittel, einem Wärmeübertrager, einem internen Wärmeübertrager, einem Verdichter, einem Kondensator und einem regelbaren Expansionsorgan der Kühleinrichtung, eine Temperatur von zumindest -80 °C oder niedriger an dem Wärmeübertrager ausgebildet wird, wobei die Kühleinrichtung als Kompressionskälteanlage ausgebildet ist, wobei das Kältemittel in dem Wärmeübertrager eine Phasenänderung durchläuft, wobei das Kältemittel einer Hochdruckseite des Kühlkreislaufs mittels des internen Wärmeübertragers gekühlt wird, wobei die Kühlung des Kältemittels der Hochdruckseite mittels des internen Wärmeübertragers zur Absenkung einer Verdampfungstemperatur am Expansionsorgan genutzt wird, wobei als Kältemittel ein zeotropes Kältemittel verwendet wird wobei das Kältemittel nicht brennbar ist und ein relatives CO2-Äquivalent, bezogen auf 100 Jahre, von < 2500 aufweist.

Derartige Verfahren bzw. Kühleinrichtungen finden regelmäßig in sogenannten Prüfkammern Verwendung, welche zur Überprüfung von physikalischen und/oder chemischen Eigenschaften von Gegenständen, insbesondere Vorrichtungen eingesetzt werden. So sind Temperaturprüfschränke oder Klimaprüfschränke bekannt, innerhalb derer Temperaturen in einem Bereich von -70 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Das in einem Kühlkreislauf eingesetzte Kältemittel sollte ein relativ geringes CO₂-Äquivalent aufweisen, das heißt ein relatives Treibhauspotenzial oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 100 Jahre festgelegt werden. Zur Definition des relativen CO₂-Äquivalents beziehungsweise GWPs wird auf den fünften Sachstandsbericht des Intergovernmental Panel on Climate Change (IPCC), Assessment Report, Appendix 8.A, Table 8.A.1 verwiesen. Es ist auch bekannt Kohlenstoffdioxid (CO₂) bzw. Kohlendioxid als Reinstoffkältemittel zu verwenden. Kohlenstoffdioxid ist kostengünstig erhältlich, nicht brennbar und durch einen GWP von 1 im Wesentlichen umweltneutral. Kohlenstoffdioxid weist eine Gefriertemperatur bzw. einem Tripelpunkt von -56,6 °C auf, was eine Erzielung von niedrigeren Temperaturen mit Kohlenstoffdioxid nicht ermöglicht. Darüber hinaus sollte ein Kältemittel nicht brennbar sein, um unter anderem eine Befüllung, einen Versand und einen Betrieb eines Kühlkreislaufs nicht aufgrund eventuell einzuhaltender Sicherheitsvorschriften zu erschweren. Auch verteuert sich die Herstellung eines Kühlkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 beziehungsweise der DIN 378 Klassen A2, A2L und A3 in der vor dem Prioritätstage der Anmeldung gültigen Fassung fällt.

Bei einem zeotropen Kältemittelgemisch erfolgt ein Phasenübergang über einen Temperaturbereich, den sogenannten Temperaturglide. Als Temperaturglide wird dabei eine Differenz zwischen der Siedetemperatur und der Taupunkttemperatur bei konstantem Druck angesehen. Bei zeotropen Kältemittelgemischen ist regelmäßig ein hoher Masseanteil einer nicht brennbaren Komponente des Kältemittelgemisches enthalten, wobei diese sich jedoch durch einen vergleichsweise hohen GWP auszeichnet. Auch sollen Kältemittel möglichst einfach einsetzbar sein, d.h. keinen aufwendigen technischen Umbau einer Kühleinrichtung erfordern. Insbesondere bei Kältemitteln mit einem Temperaturglide > 3 K ist es erforderlich, ein Expansionsorgan und einen Wärmeübertrager bzw. Verdampfer des betreffenden Kühlkreislaufs an die Verdampfungstemperatur des Kältemittels anzupassen und eine entsprechende Regelung vorzusehen.

Weiter ist zu unterscheiden zwischen Kältemitteln, die für einen statischen Betrieb einer Kühleinrichtung, d.h. einer Kühleinrichtung mit einer im Wesentlichen über einen längeren Zeitraum konstanten Temperatur am Wärmetauscher bzw. Verdampfer, und einer dynamischen Kühleinrichtung mit einem vergleichsweise schnellen Temperaturwechsel am Wärmeübertrager ausgebildet sind. Derartige dynamische Kühleinrichtungen sind unter anderem in Prüfkammern verbaut, so dass ein verwendetes Kältemittel innerhalb eines großen Temperaturbereichs einsetzbar sein muss. Weiter sind Kühleinrichtungen bekannt, bei denen ein zeotropes Kältemittelgemisch sukzessive verdampft wird. Das heißt Stoffkomponenten des Kältemittels werden nacheinander über ein Expansionsorgan verdampft. Derartige Kühleinrichtungen werden auch als Gemischkaskadenanlage bezeichnet und sind zur Ausbildung einer im Wesentlichen statischen Tieftemperatur geeignet.

Aus der US 3 872 682 A ist ein Kühlkreislauf mit einem Kompressor, einem Kondensator, einem internen Wärmeübertrager, einem Expansionsventil und einem Wärmeübertrager bekannt. In dem Kühlkreislauf wird ein zeotropes Kältemittelgemisch aus R744 und R12 genutzt, wobei in einem sogenannten Homogenisierer eine Mischung der beiden Kältemittelkomponenten vorgenommen wird. Nach einer Expansion am Expansionsventil soll das R744 gefrieren und nachfolgend sublimieren. Weiter ist eine Unterkühlung des Kältemittels auf einer Hochdruckseite mittels des internen Wärmeübertragers vorgesehen.

Das Dokument SOBIERAJ MICHAL ET AL: "High phase-separation efficiency..." offenbart ebenfalls einen derartigen Kühlkreislauf im Rahmen einer Versuchsanordnung. Hier wird ein Kältemittelgemisch aus R744 und R600A verwendet. Insbesondere kommt es zu einer Temperaturabsenkung des Kältemittels nach einem Expansionsorgan noch unter den Tripelpunkt von CO2 bzw. R744. Das CO2 liegt dann zumindest teilweise in der festen Phase vor.

Eine Prüfkammer mit einem weiteren Kühlkreislauf mit einem Kältemittelgemisch beschreibt die WO 2019/048250 A1.

Der vorliegenden Erfindung liegt daher die Aufgabe zugrunde, ein Verfahren zum Betrieb einer Kühleinrichtung, eine Kühleinrichtung sowie eine Prüfkammer mit einer Kühleinrichtung vorzuschlagen, mit dem bzw. mit der mit einfachen Mitteln eine Temperatur bis mindestens - 80 °C umweltfreundlich und sicher ausgebildet werden kann.

Diese Aufgabe wird durch ein Verfahren mit den Merkmalen des Anspruchs 1, eine Kühleinrichtung mit den Merkmalen des Anspruchs 12 und eine Prüfkammer mit den Merkmalen des Anspruchs 17 gelöst.

Bei dem erfindungsgemäßen Verfahren zum Betrieb einer Kühleinrichtung wird mittels der Kühleinrichtung mit einem Kühlkreislauf mit einem Kältemittel, einem Wärmeübertrager, einem internen Wärmeübertrager, einem Verdichter, einem Kondensator und einem regelbaren Expansionsorgan der Kühleinrichtung, eine Temperatur von zumindest -80 °C oder niedriger an dem Wärmeübertrager ausgebildet, wobei die Kühleinrichtung als Kompressionskälteanlage ausgebildet ist, wobei das Kältemittel in dem Wärmeübertrager eine Phasenänderung durchläuft, wobei das Kältemittel einer Hochdruckseite des Kühlkreislaufs mittels des internen Wärmeübertragers gekühlt wird, wobei die Kühlung des Kältemittels der Hochdruckseite mittels des internen Wärmeübertragers zur Absenkung einer Verdampfungstemperatur am Expansionsorgan genutzt wird, wobei als Kältemittel ein zeotropes Kältemittel verwendet wird, wobei das Kältemittel nicht brennbar ist und ein relatives CO2-Äquivalent, bezogen auf 100 Jahre, von < 2500 aufweist, wobei die Kühleinrichtung mit dem Kältemittel in einer flüssigen und dampfförmigen Phase wahlweise in einem ersten Betriebszustand, bei dem das Kohlenstoffdioxid auch bei der Expansion ausschließlich in der flüssigen Phase vorliegt, oder in einem zweiten Betriebszustand als Sublimationskälteanlage mit dem Kältemittel in einer zum Teil festen Phase betrieben wird, wobei in dem zweiten Betriebszustand das Expansionsorgan mittels einer Regeleinrichtung der Kühleinrichtung derart geregelt wird, dass das Kältemittel bei einer Expansion am Expansionsorgan teilweise gefriert.

Bei dem erfindungsgemäßen Verfahren ist der Wärmeübertrager an den Kühlkreislauf angeschlossen bzw. in diesen so integriert, dass im Kühlkreislauf zirkulierendes Kältemittel durch den Wärmeübertrager strömt. Der Wärmeübertrager des Kühlkreislaufs kann beispielsweise innerhalb eines Prüfraums einer Prüfkammer bzw. in einem Luftbehandlungsraum des Prüfraums angeordnet sein, sodass Luft über den Wärmeübertrager konditioniert bzw. temperiert wird. Der interne Wärmeübertrager ist ebenfalls in den Kühlkreislauf integriert und in Strömungsrichtung des Kältemittels nach dem Kondensator und vor dem Expansionsorgan angeordnet. In dem internen Wärmeübertrager erfolgt eine Unterkühlung des Kältemittels und damit eine Absenkung der Verdampfungstemperatur des Kältemittels. Dadurch wird es möglich vergleichsweise niedrige Temperaturen am Wärmeübertrager auszubilden, wenn das Kältemittel nach der Expansion am Expansionsorgan im Wärmeübertrager verdampft. Das Expansionsorgan ist mittels der Regeleinrichtung der Kühleinrichtung derart regelbar, dass eine definierte Menge an Kältemittel in einem Zeitabschnitt über das Expansionsorgan strömt, wobei das unterkühlte Kältemittel dabei stets flüssig ist bzw. in einer flüssigen Phase vorliegt. Dabei ändert sich ein Aggregatzustand des Kältemittels nach der Expansion am Expansionsorgan in Abhängigkeit der Verdampfungstemperatur am Expansionsorgan von flüssig zu gasförmig. Das flüssige Kältemittel verdampft in einem Temperaturbereich bzw. Glide allmählich, sodass in dem Kühlkreislauf bzw. dem Wärmeübertrager abschnittsweise das Kältemittel in einer flüssigen als auch gasförmigen Phase vorliegt. Die Kühleinrichtung wird dann als sogenannte Kaltdampf-Kompressionskälteanlage betrieben. Erfindungsgemäß ist nun vorgesehen, das Expansionsorgan mittels der Regeleinrichtung derart zu regeln, dass das Kältemittel bei einer Expansion am Expansionsorgan teilweise gefriert. Das heisst, dass das Kältemittel nachfolgend dem Expansionsorgan in dem Kühlkreislauf zumindest teilweise in der festen Phase vorliegt. Wesentlich dabei ist, dass das Kältemittel nicht vollständig gefriert, sodass die noch flüssigen oder gasförmigen Bestandteile des Kältemittels die festen Bestandteile des Kältemittels in dem Kühlkreislauf transportieren können und eine eventuell mögliche Verstopfung des Kühlkreislaufs durch feste Bestandteile verhindert wird. Die teilweise gefrorenen bzw. festen Bestandteile des Kältemittels sublimieren dann bzw. gehen von der festen in die gasförmige Phase über. So wird es möglich eine Sublimationsenthalpie des Kältemittels zu nutzen, welche sich aus einer Summe aus einer Schmelzenthalpie und einer Verdampfungsenthalpie ergibt. Folglich wird es möglich zusätzlich die Schmelzenthalpie zur Kälteerzeugung zu nutzen. Da der Prozess der Sublimation des Kältemittel bei tieferen Temperaturen abläuft, als der Prozess der Verdampfung des Kältemittels, wird es möglich mit dem Kältemittel eine noch tiefere Temperatur zu erzielen, wie es mit dem Kältemittel in einem Kaltdampf-Prozess möglich wäre. Die Komponenten des Kältemittels, die gefrieren, weisen folglich den höchsten Gefrierpunkt aller Komponenten des Kältemittels auf. Beim Gefrieren einer Komponente des Kältemittels entstehen feste Partikel innerhalb der flüssigen Phase des Kältemittels und eine starke Durchmischung der Phasen, was einen Durchfluss des Kältemittels sicherstellt. Insgesamt ist es daher möglich alleine mit einer angepassten Regeleinrichtung der Kühleinrichtung bzw. einer geeigneten Regelung des Expansionsorgans ein teilweises Gefrieren des Kältemittels zu bewirken, wobei dadurch noch niedrigere Temperaturen am Wärmeübertrager erzielt werden können. Dabei kann ein Kältemittel verwendet werden, welches auch für einen Kaltdampf-Prozess genutzt wird sowie umweltfreundlich und sicher einsetzbar ist.

Erfindungsgemäß ist die Kühleinrichtung als Kompressionskühlanlage ausgebildet und wird als solche mit dem Kältemittel in einer flüssigen und dampfförmigen Phase wahlweise in einem ersten Betriebszustand oder in einem zweiten Betriebszustand als Sublimationskälteanlage mit dem Kältemittel in einer zum Teil festen Phase betrieben.

Folglich kann das Kältemittel in dem Wärmeübertrager teilweise sublimieren. Dabei sublimiert der gefrorene Anteil des Kältemittels in dem Wärmeübertrager bzw. die in der Flüssigphase befindlichen Partikel. Hierdurch wird ein Tripelpunkt der flüssigen Phase gesenkt und es stellt sich aufgrund des niedrigen Tripelpunktes eine herkömmliche Verdampfung ein. Neben einer Ausweitung bzw. Absenkung des Temperaturbereichs der Kühleinrichtung wird auch eine Leistungssteigerung der Kühleinrichtung erzielt. Je nach Bedarfsanforderung kann nun die Kühleinrichtung mit einem teilweise sublimierenden Kältemittel bzw. mit einem vollständig verdampfenden bzw. flüssigen Kältemittel betrieben werden. Mit dem Verfahren ist es daher möglich die Kühleinrichtung mit einem im Wesentlichen herkömmlichen Kühlkreislauf zu betreiben. So kann der Verdichter bzw. Kompressor in herkömmlicher Art und Weise das überhitzte Kältemittel ansaugen und in dem Kühlkreislauf kontinuierlich fördern, ohne dass Umbauten an dem Kühlkreislauf erforderlich wären.

In dem Kühlkreislauf kann in einer Strömungsrichtung nach dem Expansionsorgan und vor dem Wärmeübertrager das Kältemittel mit einer homogenen Mischung aus deiner flüssigen und/oder gasförmigen Phase mit Partikeln einer festen Phase ausgebildet werden. Insbesondere dadurch, dass eine weitestgehend homogene Mischung aus der flüssigen Phase bzw. Nassdampf mit den Partikeln der festen Phase ausgebildet werden kann, kann verhindert werden, dass es zu einer Verstopfung oder Blockierung des Kühlkreislaufs durch Partikel der festen Phase kommt. Darüber hinaus kann sichergestellt werden, dass es zu keiner Entmischung von Komponenten des Kältemittels kommt. Ein Mischungsverhältnis der Komponenten bzw. ein Kältemittelgemisch ist daher stets entlang des Kühlkreislaufs im Wesentlichen konstant bzw. gleich bleibend.

Mittels der Regeleinrichtung kann das Expansionsorgan derart geregelt werden, dass auf einer Niederdruckseite des Kühlkreislaufs ein Druck von 1 bar oder geringer ausgebildet werden kann. Somit ist eine Einstellung einer Sublimationstemperatur bzw. eines Sublimationsdrucks in dem Kühlkreislauf auch unterhalb eines Umgebungsdrucks von 1 bar möglich. Die Einstellung bzw. Regelung dieses Drucks kann besonders einfach mittels der Regeleinrichtung bzw. durch das Expansionsorgan erfolgen. Weitere zusätzliche Umbauten des Kühlkreislaufs oder Komponenten werden hierzu nicht benötigt. Beispielsweise kann der Druck auf der Niederdruckseite leicht durch die Regeleinrichtung dadurch ausgebildet werden, dass das Expansionsorgan gedrosselt wird, während der Verdichter betrieben wird. Der Sublimationsdruck kann dann in Abhängigkeit des verwendeten Kältemittels bzw. der in dem Kältemittel enthaltenen Komponenten und deren jeweiliger Sublimationstemperatur ausgewählt werden. Die Regeleinrichtung kann folglich in Abhängigkeit eines verwendeten Kältemittels eingestellt bzw. programmiert werden.

Das Kältemittel kann ein Kältemittelgemisch aus einem Masseanteil Kohlenstoffdioxid und einem Masseanteil mindestens einer weiteren Komponente verwendet werden. Das Kältemittelgemisch kann aus Kohlenstoffdioxid und einem bzw. mehreren fluorierten Kältemitteln bestehen, die einen geringen GWP aufweisen und nicht oder eingeschränkt brennbar sind. Ein Anteil an Kohlenstoffdioxid muss dabei möglichst gering sein, da sonst ein Gefrierpunkt des Kältemittelgemisches mit einem steigenden Masseanteil von Kohlenstoffdioxid zunimmt. Ein geringerer Masseanteil an Kohlenstoffdioxid mindert jedoch eine das GWP reduzierende Wirkung des Kohlenstoffdioxids. So weisen teilfluorierte Kältemittel einen deutlich höheren GWP als Kohlenstoffdioxid auf, wobei diese jedoch auch eine verbesserte brandhemmende Wirkung haben. Weiter kann das Kältemittel einen Temperaturglide von ≥ 10 K, bevorzugt ≥ 15 K, besonders bevorzugt ≥ 18 K aufweisen. Ein Temperaturglide des Kältemittels sollte dabei nicht > 20 K sein, damit eine Kühleinrichtung sinnvoll betrieben werden kann.

Ein Verhältnis der Komponenten des Kältemittels kann in dem Kühlkreislauf stets konstant bleiben. Dabei ist hier explizit vorgesehen, dass die Stoffkomponenten des Kältemittels im Mischungsverhältnis des Kältemittels über das Expansionsorgan geleitet werden.

Die weiteren Komponenten können einen Gefrierpunkt aufweisen, der unter einem Gefrierpunkt des Kohlenstoffdioxids bei einem in dem Kühlkreislauf ausgebildeten Druck liegt. Das Kohlenstoffdioxid ist dann die Komponente des Kältemittels, welche am Expansionsorgan teilweise oder vollständig gefriert. Eine Unterkühlung des Kältemittels in dem internen Wärmeübertrager kann bis nahe oder unter einer Tripelpunkttemperatur der höchstschmelzenden Komponente bzw. des Kohlenstoffdioxids erfolgen. Bei der Expansion des Kältemittels am Expansionsorgan kann das Kohlenstoffdioxid dann in Abhängigkeit der Unterkühlung des Kältemittels teilweise oder vollständig gefrieren. Sofern die Kühleinrichtung über die Regeleinrichtung konventionell betrieben wird, kann das Kohlenstoffdioxid auch bei der Expansion zunächst ausschließlich in der flüssigen Phase vorliegen. Die übrigen Komponenten des Kältemittelgemischs weisen tiefere Gefrierpunkte als das Kältemittelgemisch bzw. das Kohlenstoffdioxid auf und bilden bei der Expansion am Expansionsorgan dann eine flüssige Phase aus, die als ein Trägermedium für das in der festen Phase bzw. Partikeln vorliegende Kohlenstoffdioxid fungiert.

Der Masseanteil Kohlenstoffdioxid kann 10 bis 50 Masseprozent, vorzugsweise 30 bis 50 Masseprozent betragen. Mit einem derartigen Masseanteil kann bereits ein ausreichend niedriger GWP erzielt werden. Gleichzeitig kann auch verhindert werden, dass es zu einer Verstopfung des Kühlkreislaufs kommt, was der Fall sein könnte, wenn ein Masseanteil an Kohlenstoffdioxid vergleichsweise hoch wäre.

Die weitere Komponente kann Pentafluorethan und/oder Difluormethan sein. Insbesondere Pentafluorethan und Difluormethan enthalten eine erhebliche Menge an Fluoratomen, was zu einem unerwünscht hohen GWP führt. Wie sich überraschenderweise herausgestellt hat, kann jedoch mit einem Kältemittelgemisch mit einem Masseanteil Kohlenstoffdioxid von 30 bis 40 Masseprozent mit Pentafluorethan und/oder Difluormethan ein ausreichend niedriger GWP, d.h. beispielsweise < 400 erzielt werden. Mit der Auswahl von weiteren Komponenten lassen sich niedrige GWP-Werte, beispielsweise < 150 erzielen. Wie sich ebenfalls herausgestellt hat ist eine brandhemmende Wirkung von Pentafluorethan vergleichsweise größer als die von Kohlenstoffdioxid. Durch ein Hinzufügen von Difluormethan als dritte Komponente des Kältemittelgemisches können die negativen Eigenschaften des Pentafluorethans und des Kohlenstoffdioxids darüber hinaus reduziert werden. So ist ein Kältemittelgemisch mit Pentafluorethan und Difluormethan als nicht brennbar einzustufen. Gleichzeitig weist Difluormethan mit Kohlenstoffdioxid eine tiefere Gefriertemperatur auf als mit Pentafluorethan. Folglich kann mit einem Gemisch aus Pentafluorethan, Difluormethan und Kohlenstoffdioxid eine geringere Gefriertemperatur als mit Pentafluorethan und Kohlenstoffdioxid alleine erreicht werden. Difluormethan senkt damit den Gefrierpunkt des Kältemittelgemisches signifikant ab, wobei ein bestimmter Masseanteil an Kohlenstoffdioxid erforderlich ist, damit das Kältemittelgemisch nicht brennbar ist. Gleichzeitig erzeugt Difluormethan jedoch eine hohe Verdichtungsendtemperatur, weshalb Difluormethan als alleiniger Mischungspartner für Kohlenstoffdioxid nur eingeschränkt geeignet ist. Pentafluorethan kann einen Gefrierpunkt des Kältemittelgemisches nicht so weit absenken wie Difluormethan, hat aber eine im Vergleich zu Kohlenstoffdioxid höhere flammhemmende Wirkung, was vorteilhaft ist.

In einer weiteren Ausführungsform kann bei dem Kältemittel ein Masseanteil Kohlendioxid 33 bis 38, bevorzugt 35 Masseprozent, ein Masseanteil Pentafluorethan 33,5 bis 31, bevorzugt 32,5 Masseprozent, und ein Masseanteil Difluormethan 33,5 bis 31, bevorzugt 32,5 Masseprozent betragen. Das Kältemittelgemisch kann demnach alleine aus drei Komponenten bestehen. Ein Masseanteil der Komponenten Difluormethan und Pentafluorethan ist dann gleich groß. Wie vorstehend bereits beschrieben, hat sich eine Mischung von Kohlendioxid mit Pentafluorethan und Difluormethan als besonders vorteilhaft herausgestellt. Dieses Kältemittelgemisch kann einen Temperaturgleit > 7 K bei Verdampfungsdrücken um 1 bar aufweisen. Weiter führt dieses Kältemittelgemisch zu einer Reduktion des Gefrierpunktes, welche Konzentrationsabhängig ist. Es können sich daher, bei von den angegebenen Masseanteilen abweichenden Masseanteilen, brennbare und nicht brennbare Kältemittelgemische für unterschiedliche Temperaturanwendungen ergeben.

Kohlenstoffdioxid (CO₂) ist auch als Kältemittel bzw. Komponente unter der Bezeichnung R744, Pentafluorethan (C₂HF₅) unter der Bezeichnung R125 und Difluormethan (CH₂F₂) unter der Bezeichnung R32 gemäß DIN 8960 in der zuletzt gültigen Fassung vor dem Prioritätstag der Anmeldung bekannt.

Das Kältemittel kann bei einer Temperatur von unterhalb -75 °C teilweise gefrieren und bei einer Temperatur von oberhalb von -75 °C flüssig und/oder gasförmig sein. Folglich kann das Kältemittel dann für einen Betrieb der Kühleinrichtung alleine mit Kältemittel in der flüssigen und dampfförmigen Phase und wahlweise mit Kältemittel in der flüssigen Phase, dampfförmigen Phase, und festen Phase genutzt werden.

Bei dem Verfahren kann eine Temperatur von zumindest -90 °C, bevorzugt -100 °C oder niedriger an dem Wärmeübertrager ausgebildet werden. Das Verfahren ermöglicht dann eine wesentliche Verminderung einer Temperatur an dem Wärmeübertrager, was mit einem herkömmlichen Betrieb der Kühleinrichtung mit dem Kältemittel nicht möglich wäre.

Das Kältemittel kann ein relatives CO2-Äquivalent, bezogen auf 100 Jahre, von < 1500, bevorzugt < 500, aufweisen. Folglich kann das Kältemittel wenig umweltschädigend sein. Wenn das Kältemittel nicht brennbar ist, wird es möglich, den Kühlkreislauf und insbesondere eine Prüfkammer kostengünstiger auszubilden, da keine besonderen Sicherheitsvorkehrungen hinsichtlich Brennbarkeit des Kältemittels zu beachten sind. Das Kältemittel kann dann zumindest nicht der Brandklasse C und/oder der Kältemittelsicherheitsgruppe A1 zugeordnet werden. Darüber hinaus wird ein Versand beziehungsweise ein Transport des Kühlkreislaufs vereinfacht, da der Kühlkreislauf bereits vor einem Transport, unabhängig von der Transportart mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung des nicht brennbaren Kältemittels bei vorhandenen Zündquellen möglich.

Die erfindungsgemäße Kühleinrichtung dient zur Konditionierung von Luft, wobei die Kühleinrichtung einen Kühlkreislauf mit einem Kältemittel, einem Wärmeübertrager, einem internen Wärmeübertrager, einem Verdichter, einem Kondensator und einem regelbaren Expansionsorgan aufweist, wobei die Kühleinrichtung als Kompressionskälteanlage ausgebildet ist, wobei mittels der Kühleinrichtung, eine Temperatur von zumindest -80 °C oder niedriger an dem Wärmeübertrager ausbildbar ist, wobei das Kältemittel in dem Wärmeübertrager eine Phasenänderung durchlaufen kann, wobei der interne Wärmeübertrager zur Kühlung des Kältemittels an der Hochdruckseite des Kühlkreislaufs und zur Absenkung einer Verdampfungstemperatur am Expansionsorgan nutzbar ist, wobei das Kältemittel ein zeotropes Kältemittel ist, wobei das Kältemittel nicht brennbar ist und ein relatives CO2-Äquivalent, bezogen auf 100 Jahre, von < 2500 aufweist, wobei die Kühleinrichtung eine Regeleinrichtung aufweist, mittels der das Expansionsorgan regelbar ist, wobei die Kühleinrichtung mit dem Kältemittel in einer flüssigen und dampfförmigen Phase wahlweise in einem ersten Betriebszustand, bei dem das Kohlenstoffdioxid auch bei der Expansion ausschließlich in der flüssigen Phase vorliegt, oder in einem zweiten Betriebszustand als Sublimationskälteanlage mit dem Kältemittel in einer zum Teil festen Phase betreibbar ist, wobei mittels der Regeleinrichtung das Expansionsorgan derart regelbar ist, dass das Kältemittel bei einer Expansion am Expansionsorgan teilweise gefrieren kann. Zu den Vorteilen der erfindungsgemäßen Kühleinrichtung wird auf die Vorteilsbeschreibung des erfindungsgemäßen Verfahrens verwiesen.

Der interne Wärmeübertrager kann an der Hochdruckseite des Kühlkreislaufs in einer Strömungsrichtung vor dem Expansiosorgan und nachfolgend dem Kondensator, und an einer Niederdruckseite des Kühlkreislaufs in einer Strömungsrichtung vor dem Verdichter und nachfolgend dem Wärmeübertrager angeschlossen sein. Durch den Einsatz des internen Wärmetübertragers und die damit durchgeführte Kühlung des verflüssigten Kältemittels der Hochdruckseite können Temperaturen unter -56 °C leicht erreicht werden. Dabei kann die Verdampfungstemperatur des mit dem internen Wärmeübertrager gekühlten Kältemittels am Expansionsorgan relativ zu einer Verdampfungstemperatur eines ungekühlten Kältemittels abgesenkt werden. Die über den internen Wärmeübertrager von der Niederdruckseite auf die Hochdruckseite übertragene Kälteleistung kann somit zumindest teilweise, bevorzugt ausschließlich zur Absenkung der Verdampfungstemperatur des Kältemittels am Expansionsorgan genutzt werden. Weiter wird es überhaupt erst möglich, ein zeotropes Kältemittel mit einem Temperaturglide zu verwenden, da dann der Ort der Taupunkttemperatur des Kältemittels beziehungsweise der Taupunkt des Kältemittels in den internen Wärmeübertrager verschoben werden kann. Infolge des Temperaturglides des zeotropen Kältemittels kann die erzielte Taupunkttemperatur des Kältemittels vergleichsweise hoch sein und so eine weitergehende Abkühlung des Wärmeübertragers verhindern. So kann der sogenannte effektive Temperaturglide, also jene Temperaturdifferenz die bei isobarer teilweiser Verdampfung im Wärmeübertrager vorliegt, gezielt gesteuert werden. Folglich ist auch mit Kältemitteln mit hohem Temperaturgleit > 7 K, eine präzise Temperatureinstellung möglich. Der interne Wärmeübertrager kann als eine Unterkühlstrecke oder ein Wärmetauscher, insbesondere Plattenwärmetauscher, ausgebildet sein. Die Unterkühlstrecke kann bereits durch zwei aneinander anliegende Leitungsabschnitte des Kühlkreislaufs ausgebildet sein.

Die Regeleinrichtung kann zumindest einen Drucksensor und/oder zumindest einen Temperatursensor an dem Kühlkreislauf aufweisen, wobei das Expansionsorgan mittels der Regeleinrichtung in Abhängigkeit von einer gemessenen Temperatur bzw. eines Drucks betätigt werden kann. Das Expansionsorgan kann ein Drosselorgan und ein Magnetventil aufweisen, wobei über das Drosselorgan und das Magnetventil Kältemittel dosiert werden kann. Das Drosselorgan kann ein einstellbares Ventil oder eine Kapillare sein, über das dann mittels des Magnetventils Kältemittel geleitet wird. Das Magnetventil kann seinerseits mittels der Regeleinrichtung betätigt werden. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Kühleinrichtung veranlassen, um die Kühleinrichtung vor einer Beschädigung durch kritische oder unerwünschte Betriebszustände zu schützen.

In einer weiteren Ausführungsform kann der Kondensator als ein Kaskaden-Wärmeübertrager eines weiteren Kühlkreislaufs der Kühleinrichtung ausgebildet sein. Demnach kann die Kühleinrichtung dann zumindest zwei Kühlkreisläufe aufweisen, wobei der Kühlkreislauf eine zweite Stufe der Kühleinrichtung und ein weiterer Kühlkreislauf, der dann dem Kühlkreislauf vorgelagert ist, eine erste Stufe der Kühleinrichtung ausbilden kann. Der Kondensator dient dann als ein Kaskaden-Wärmeübertrager beziehungsweise Wärmeübertrager für den weiteren Kühlkreislauf. Bei dieser Ausführungsform wird es möglich, besonders niedrige Temperaturen am Wärmeübertrager in dem Prüfraum auszubilden.

Im Kühlkreislauf kann ein erster Bypass mit zumindest einem regelbaren zweiten Expansionsorgan ausgebildet sein, wobei der erste Bypass in einer Strömungsrichtung vor dem internen Wärmeübertrager und nachfolgend dem Kondensator sowie in der Strömungsrichtung vor dem internen Wärmeübertrager und nachfolgend dem Wärmeübertrager an den Kühlkreislauf angeschlossen sein kann, wobei der erste Bypass als regelbare interne Ergänzungskühlung und eine Rückeinspritzeinrichtung für Kältemittel ausgebildet sein kann. Demnach kann von dem regelbaren zweiten Expansionsorgan dem internen Wärmeübertrager auf der Niederdruckseite Kältemittel zugeführt werden. Der erste Bypass kann dann an der Niederdruckseite des Kühlkreislaufs in einer Strömungsrichtung vor dem internen Wärmeübertrager und nachfolgend dem Wärmeübertrager angeschlossen sein. Das durch das zweite Expansionsorgan gekühlte beziehungsweise in seinem Temperaturniveau abgesenkte Kältemittel kann dann durch den internen Wärmeübertrager hindurch geleitet werden und eine Kühlung des Kältemittels auf der Hochdruckseite des internen Wärmeübertragers verstärken. Auch wird eine Kühlleistung des internen Wärmeübertragers dadurch noch genauer regelbar.

Die erfindungsgemäße Prüfkammer weist eine erfindungsgemäße Kühleinrichtung auf, wobei die Prüfkammer zur Konditionierung von Luft einen gegenüber einer Umgebung verschließbaren temperaturisolierten Prüfraum zur Aufnahme von Prüfgut und eine die Kühleinrichtung aufweisende Temperiervorrichtung zur Temperierung des Prüpfraums umfasst, wobei mittels der Temperiervorrichtung eine Temperatur in einem Temperaturbereich von -80 °C bis +180 °C, bevorzugt -90 °C bis +180 °C, besonders bevorzugt -100 °C bis +180 °C, innerhalb des Prüfraums ausbildbar ist. Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Wärmung der im Prüfung umgewälzten Luft gezielt gesteuert werden können, kann mittels der Temperiervorrichtung innerhalb des Prüfraums eine Temperatur in dem vorstehend angegebenen Temperaturbereich ausgebildet werden. Alternativ kann eine hohe Temperatur in dem Prüfraum auch durch Abwärme von Prüfgut ausgebildet werden.

Weitere Ausführungsformen einer Prüfkammer ergeben sich aus den Merkmalsbeschreibungen der auf den Vorrichtungsanspruch 13 zurückbezogenen Unteransprüche.

Bei einer Verwendung eines zeotropen Kältemittels, bestehend aus einem Kältemittelgemisch aus einem Masseanteil Kohlenstoffdioxid und einem Masseanteil mindestens einer weiteren Komponente, in einem Kühlkreislauf einer Kühleinrichtung, wobei die weitere Komponente einen Gefrierpunkt aufweist, der unter einem Gefrierpunkt des Kohlenstoffdioxids bei einem im Kühlkreislauf ausgebildeten Druck liegt, wobei die weitere Komponente in einer flüssigen und/oder gasförmigen Phase das Kohlenstoffdioxid zumindest teilweise in einer festen Phase vorliegt, bildet die weitere Komponente ein Trägermedium für das Kohlenstoffdioxid in der festen Phase aus. Zu den Vorteilen der Verwendung wird auf die Vorteilsbeschreibung des erfindungsgemäßen Verfahrens verwiesen. Weitere Ausführungsformen einer Verwendung ergeben sich aus den Merkmalsbeschreibungen der auf den Verfahrensanspruch 1 und den Vorrichtungsanspruch 13 zurückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: ein Druck-Enthalpie-Diagramm für ein Kältemittel;
- **Fig. 2**: eine schematische Darstellung einer ersten Ausführungsform einer Kühleinrichtung;
- **Fig. 3**: eine schematische Darstellung einer zweiten Ausführungsform einer Kühleinrichtung;
- **Fig. 4**: eine schematische Darstellung einer dritten Ausführungsform einer Kühleinrichtung;
- **Fig. 5**: eine schematische Darstellung einer vierten Ausführungsform einer Kühleinrichtung;
- **Fig. 6**: eine schematische Darstellung einer fünften Ausführungsform einer Kühleinrichtung.

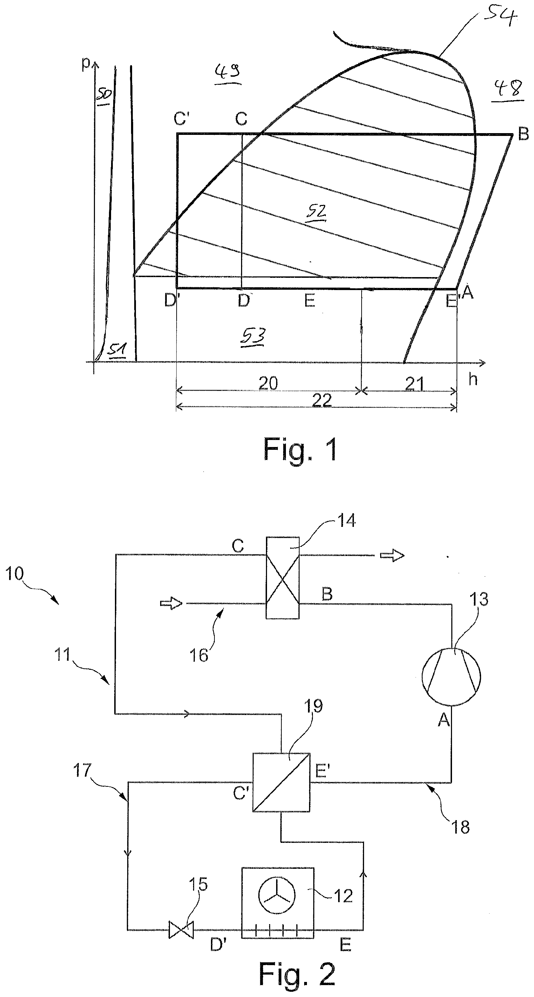

Die **Fig. 2** zeigt eine erste Ausführungsform einer Kühleinrichtung 10 einer hier nicht näher dargestellten Prüfkammer. Die Kühleinrichtung 10 umfasst einen Kühlkreislauf 11 mit einem Kältemittel, einem Wärmeübertrager 12, einem Verdichter 13 und einem Kondensator 14 sowie einem Expansionsorgan 15. Der Kondensator 14 wird hier durch einen weiteren Kühlkreislauf 16 gekühlt. Der Wärmeübertrager 12 ist in einem hier nicht dargestellten Prüfraum der Prüfkammer angeordnet. Weiter weist der Kühlkreislauf 11 eine Hochdruckseite 17 und eine Niederdruckseite 18 auf, an die ein interner Wärmeübertrager 19 angeschlossen ist.

Die **Fig. 1** zeigt ein Druck-Enthalpie-Diagramm (log p/h-Diagramm) für das im Kühlkreislauf 11 zirkulierende Kältemittel, bei dem es sich um ein zeotropes Kältemittel handelt. In dem Druck-Enthalpie-Diagramm des Kältemittels sind verschiedene Aggregatszustände des Kältemittels dargestellt. Insbesondere ergeben sich ein Bereich 48 mit dem Kältemittel in einer gasförmigen Phase, ein Bereich 49 mit dem Kältemittel in einer flüssigen Phase, ein Bereich 50 mit dem Kältemittel in einer festen Phase, ein Bereich 51 mit dem Kältemittel in einer festen und flüssigen Phase, ein Bereich 52 mit dem Kältemittel in einer flüssigen und gasförmigen Phase und ein Bereich 53 mit dem Kältemittel in einer festen, flüssigen und gasförmigen Phase. Da sich bei der Expansion eine Zusammensetzung der flüssigen Phase ändert, kann das Kältemittel auch mit drei koexistierenden Phasen in einem Gleichgewicht vorliegen. Ein Übergang zwischen den jeweiligen Aggregatzuständen erfolgt an Grenzlinien 54 zwischen den Bereichen 48 bis 53.

Ausgehend von der Position A wird nach einer Zusammenschau der **Fig. 1** und **2** das Kältemittel vor dem Verdichter 13 angesaugt und komprimiert, sodass ein Druck entsprechend der Position B in Strömungsrichtung nach dem Verdichter 13 erzielt wird. Das Kältemittel wird mittels des Verdichters 13 verdichtet und entsprechend der Position C nachfolgend im Kondensator 14 verflüssigt. Das Kältemittel durchläuft den internen Wärmeübertrager 19 auf der Hochdruckseite 17 und wird in diesem weiter abgekühlt, sodass die Position C' in Strömungsrichtung vor dem Expansionsorgan 15 erreicht wird. Mithilfe des internen Wärmeübertragers 19 kann der im Wärmeübertrager 12 nicht nutzbare Teil des Nassdampfgebietes (Positionen E bis E') zur weiteren Reduzierung einer Temperatur des Kältemittels (Positionen C' bis C) genutzt werden. An dem Expansionsorgan 15 erfolgt eine Entspannung des Kältemittels (Positionen C' bis D') und eine teilweise Verflüssigung in dem Wärmeübertrager 12 (Positionen D' bis E). Dabei gefriert das Kältemittel teilweise in Abhängigkeit der Unterkühlung des Kältemittels am internen Wärmeübertrager 19 bzw. einer Regelung des Expansionsorgans 15. Danach gelangt der Nassdampf des Kältemittels in den internen Wärmeübertrager 19 auf der Niederdruckseite 18, wobei hier eine Nachverdampfung des Kältemittels bis zur Taupunkttemperatur beziehungsweise dem Taupunkt des Kältemittels bei der Position E' erfolgt. Eine erste Teilstrecke 20 einer Verdampfungsstrecke 22 des Kältemittels verläuft daher durch den Wärmeübertrager 12, wobei eine zweite Teilstrecke 21 der Verdampfungsstrecke 22 durch den internen Wärmeübertrager 19 verläuft. Wesentlich ist hier, dass auf der Verdampfungsstrecke 22 ein Saugdruck des Verdichters 13 auf der Niederdruckseite 18 auch bei einer Änderung der Verdampfungstemperatur am Expansionsorgan 15 konstant gehalten wird.

Bei dem Kältemittel handelt es sich um ein Kältemittelgemisch aus einem Masseanteil Kohlendioxid von 30 bis 50 Masseprozent und einem Masseanteil mindestens einer weiteren Komponente, wobei die weitere Komponente Pentafluorethan und/oder Difluormethan ist. Prinzipiell ist es möglich, in dem Kühlkreislauf 11 und den nachfolgend beschriebenen Kühlkreisläufen auch andere geeignete Kältemittel zu verwenden.

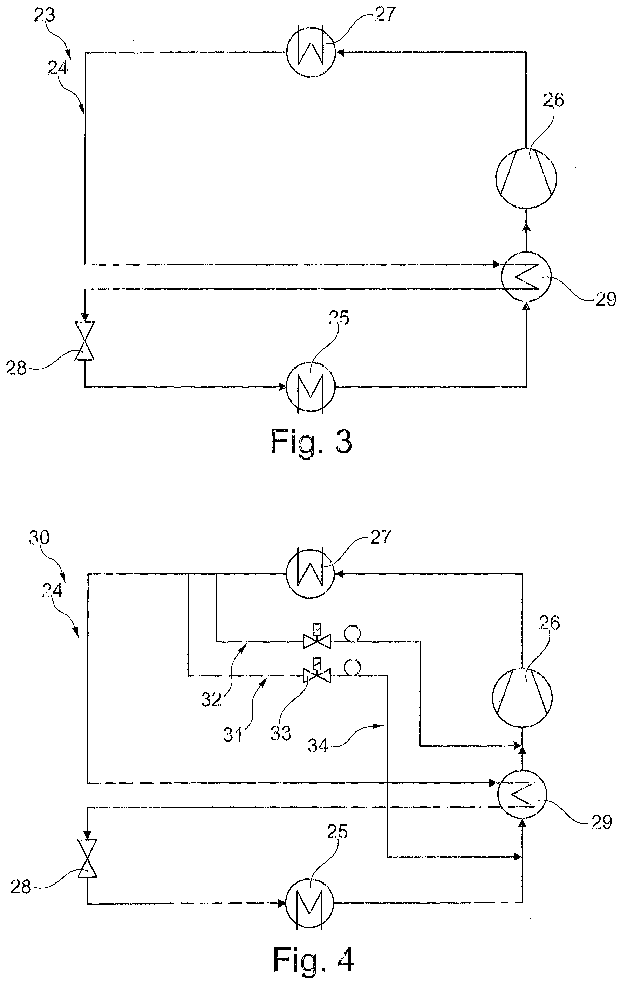

Die **Fig. 3** zeigt eine schematische Darstellung einer einfachsten Ausführungsform einer Kühleinrichtung 23, wobei die Kühleinrichtung 23 selbstregelnd ausgebildet ist. Die Kühleinrichtung umfasst einen Kühlkreislauf 24 mit einem Wärmeübertrager 25, einem Verdichter 26, einem Kondensator 27, einem Expansionsorgan 28 und einem internen Wärmeübertrager 29. Je nach einer Temperatur am Wärmeübertrager 25 entweicht nicht vollständiges verdampftes Kältemittel aus dem Wärmeübertrager 25, da die Temperatur am Wärmeübertrager 25 beziehungsweise in einem hier nicht gezeigten Prüfraum nicht mehr ausreicht, um einen Phasenwechsel zu erzeugen. In diesem Fall wird noch flüssiges Kältemittel im internen Wärmeübertrager 29 nachverdampft, da hier ein Temperaturunterschied immer größer als am Wärmeübertrager 25 sein muss. Sobald die Temperatur des flüssigen Kältemittels vor dem Expansionsorgan 28 durch den Wärmeaustausch im internen Wärmeübertrager 29 reduziert wurde, erhöht sich die Energiedichte und die damit erzielbare Temperaturdifferenz am Wärmeübertrager 25. Bei der Kühleinrichtung 23 ist eine aufwendige Regelung mit Sensoren etc. nicht erforderlich.

Die **Fig. 4** zeigt eine Kühleinrichtung 30, die im Unterschied zur Kühleinrichtung aus **Fig. 3** mit einem ersten Bypass 31 und einem zweiten Bypass 32 ausgebildet ist. In dem ersten Bypass 31 ist ein regelbares zweites Expansionsorgan 33 angeordnet, wobei der erste Bypass 31 als interne Ergänzungskühlung 34 ausgebildet ist. Der erste Bypass 31 ist unmittelbar in Strömungsrichtung nachfolgend dem Kondensator 27 vor dem internen Wärmetauscher 29 sowie in Strömungsrichtung nach dem Wärmeübertrager 25 und vor dem internen Wärmeübertrager 29 an den Kühlkreislauf 24 angeschlossen. Der erste Bypass 31 überbrückt somit das Expansionsorgan 28 mit dem Wärmeübertrager 25, wobei über das zweite Expansionsorgan 33 dem internen Wärmeübertrager 29 verdampfendes Kältemittel zugeführt werden kann. Ein Sauggasmassenstrom, der in den internen Wärmeübertrager 29 geleitet wird, kann mithilfe des ersten Bypass 31 bei hohen Sauggastemperaturen, welche durch den Wärmeübertrager 25 entstehen können, zusätzlich gekühlt werden. Somit kann sichergestellt werden, dass es zu keiner Verdampfung von Kältemittel vor dem Expansionsorgan kommen kann. Mittels des ersten Bypass 31 ist es daher möglich, auf wechselnde Lastfälle der Kühleinrichtung 30 zu reagieren. Der zweite Bypass 32 weist ein drittes Expansionsorgan 35 auf und ist in Strömungsrichtung nachfolgend dem Kondensator 27 und vor dem internen Wärmeübertrager 29 sowie nachfolgend dem internen Wärmeübertrager 29 und vor dem Verdichter 26 an den Kühlkreislauf 24 angeschlossen. Dadurch wird es möglich einen Sauggasmassenstrom vor dem Verdichter 26 über den zweiten Bypass 32 soweit zu reduzieren, dass unzulässig hohe Verdichtungsendtemperaturen vermieden werden.

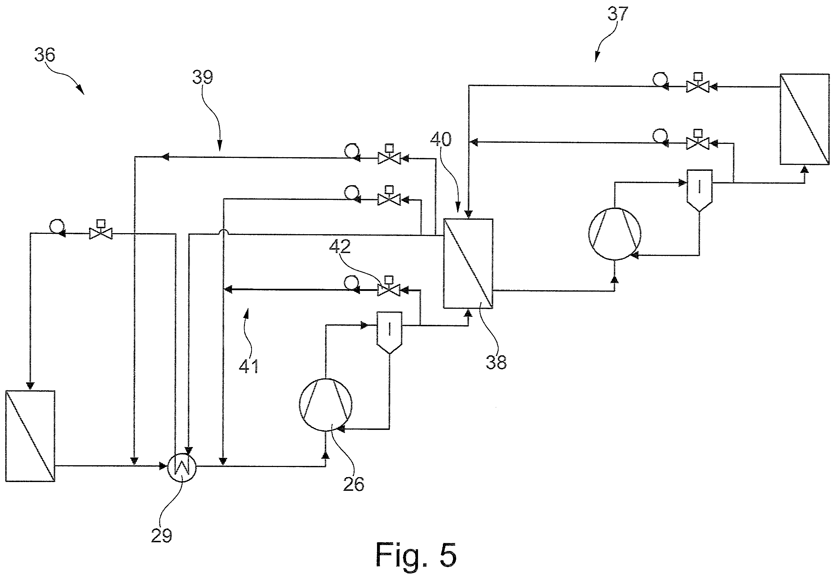

Die **Fig. 5** zeigt eine Kühleinrichtung 36, die im Unterschied zur Kühleinrichtung aus **Fig. 4** einen weiteren Kühlkreislauf 37 aufweist. Der weitere Kühlkreislauf 37 dient zur Kühlung eines Kondensators 38 eines Kühlkreislaufs 39. Der Kondensator 38 ist hier als ein Kaskaden-Wärmeübertrager 40 ausgebildet. Weiter weist der Kühlkreislauf 39 noch einen weiteren Bypass 41 mit einem weiteren Expansionsorgan 42 auf. Der weitere Bypass 41 ist in Strömungsrichtung des Kühlkreislaufs 39 nachfolgend dem Verdichter 26 und vor dem Kondensator 38 sowie nachfolgend dem internen Wärmeübertrager 29 und vor dem Verdichter 26 an den Kühlkreislauf 39 angeschlossen. Über den weiteren Bypass 41 kann somit noch nicht verflüssigtes, aber verdichtetes Kältemittel zurück, vor den Verdichter 26 strömen, wodurch eine Sauggastemperatur und/oder ein Sauggasdruck des Kältemittels geregelt werden kann.

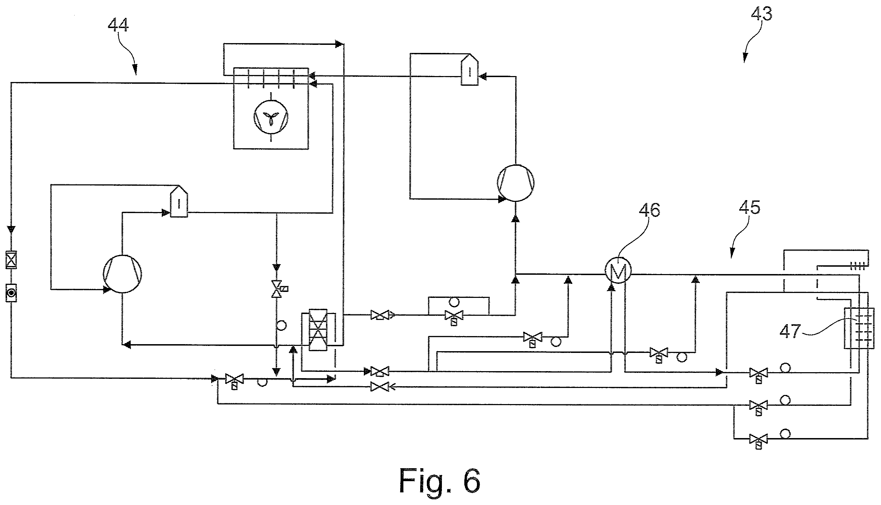

Die **Fig. 6** zeigt eine Kühleinrichtung 30 mit einem Kühlkreislauf 44 und einem weiteren Kühlkreislauf 45 und insbesondere einem internen Wärmeübertrager 46 in dem Kühlkreislauf 44. Ein Wärmeübertrager 47 ist hier in einem nicht dargestellten, temperaturisolierten Prüfraum einer Prüfkammer angeordnet.

## Patentansprüche

1. Verfahren zum Betrieb einer Kühleinrichtung (10, 23, 30, 36, 43), wobei mittels der Kühleinrichtung mit einem Kühlkreislauf (11, 24, 39, 44) mit einem Kältemittel, einem Wärmeübertrager (12, 25, 47), einem internen Wärmeübertrager (19, 29, 46), einem Verdichter (13, 26), einem Kondensator (14, 27, 38) und einem regelbaren Expansionsorgan (15, 25, 28) der Kühleinrichtung, eine Temperatur von zumindest -80°C oder niedriger an dem Wärmeübertrager ausgebildet wird, wobei die Kühleinrichtung als Kompressionskälteanlage ausgebildet ist, wobei das Kältemittel in dem Wärmeübertrager eine Phasenänderung durchläuft, wobei das Kältemittel einer Hochdruckseite (17) des Kühlkreislaufs mittels des internen Wärmeübertragers gekühlt wird, wobei die Kühlung des Kältemittels der Hochdruckseite mittels des internen Wärmeübertragers zur Absenkung einer Verdampfungstemperatur am Expansionsorgan genutzt wird, wobei als Kältemittel ein zeotropes Kältemittel verwendet wird, wobei das Kältemittel nicht brennbar ist und ein relatives CO2-Äquivalent, bezogen auf 100 Jahre, von < 2500 aufweist,
**dadurch gekennzeichnet,**
**dass** die Kühleinrichtung mit dem Kältemittel in einer flüssigen und dampfförmigen Phase wahlweise in einem ersten Betriebszustand, bei dem das Kohlenstoffdioxid auch bei der Expansion ausschließlich in der flüssigen Phase vorliegt, oder in einem zweiten Betriebszustand als Sublimationskälteanlage mit dem Kältemittel in einer zum Teil festen Phase betrieben wird, wobei in dem zweiten Betriebszustand das Expansionsorgan mittels einer Regeleinrichtung der Kühleinrichtung derart geregelt wird, dass das Kältemittel bei einer Expansion am Expansionsorgan teilweise gefriert.

2. Verfahren nach Anspruch 1,
**dadurch gekennzeichnet,**
**dass** in dem Kühlkreislauf (11, 24, 39, 44) in einer Strömungsrichtung nach dem Expansionsorgan (15, 25, 28) und vor dem Wärmeübertrager (12, 25, 47) das Kältemittel mit einer homogenen Mischung aus einer flüssigen und/oder gasförmigen Phase mit Partikeln einer festen Phase ausgebildet wird.

3. Verfahren nach Anspruch 1 oder 2,
**dadurch gekennzeichnet,**
**dass** mittels der Regeleinrichtung das Expansionsorgan (15, 25, 28) derart geregelt wird, dass auf einer Niederdruckseite (18) des Kühlkreislaufs (11, 24, 39, 44)ein Druck von 1 bar oder geringer ausgebildet wird.

4. Verfahren nach einem der vorangehenden Ansprüche,
**dadurch gekennzeichnet,**
**dass** als Kältemittel ein Kältemittelgemisch aus einem Masseanteil Kohlenstoffdioxid (CO₂) und einem Masseanteil mindestens einer weiteren Komponente verwendet wird.

5. Verfahren nach Anspruch 4,
**dadurch gekennzeichnet,**
**dass** ein Verhältnis der Komponenten des Kältemittels in dem Kühlkreislauf (11, 24, 39, 44) stets konstant bleibt.

6. Verfahren nach Anspruch 4 oder 5,
**dadurch gekennzeichnet,**
**dass** die weitere Komponente einen Gefrierpunt aufweist, der unter einem Gefrierpunkt des Kohlenstoffdioxids (CO₂) bei einem in dem Kühlkreislauf (11, 24, 39, 44) ausgebildeten Druck liegt.

7. Verfahren nach einem der Ansprüche 4 bis 6,
**dadurch gekennzeichnet,**
**dass** der Masseanteil Kohlenstoffdioxid (CO₂) 10 bis 50 Masseprozent, vorzugsweise 30 bis 50 Masseprozent beträgt.

8. Verfahren nach einem der Ansprüche 4 bis 7,
**dadurch gekennzeichnet,**
**dass** die weitere Komponente Pentafluorethan (C₂HF₅) und/oder Difluormethan (CH₂F₂) ist.

9. Verfahren nach einem der vorangehenden Ansprüche,
**dadurch gekennzeichnet,**
**dass** das Kältemittel bei einer Temperatur von unterhalb -75°C teilweise gefriert und bei einer Temperatur oberhalb von -75°C flüssig und/oder gasförmig ist.

10. Verfahren nach einem der vorangehenden Ansprüche,
**dadurch gekennzeichnet,**
**dass** eine Temperatur von zumindest -90°C, bevorzugt -100°C oder niedriger an dem Wärmeübertrager ausgebildet wird.

11. Verfahren nach einem der vorangehenden Ansprüche,
**dadurch gekennzeichnet,**
**dass** das Kältemittel ein relatives CO2-Äquivalent, bezogen auf 100 Jahre, von < 1500, bevorzugt < 500, aufweist.

12. Kühleinrichtung (10, 23, 30, 36, 43) zur Konditionierung von Luft, wobei die Kühleinrichtung einen Kühlkreislauf (11, 24, 39, 44) mit einem Kältemittel, einem Wärmeübertrager (12, 25, 47), einem internen Wärmeübertrager (19, 29, 46), einem Verdichter (13, 26), einem Kondensator (14, 27, 38) und einem regelbaren Expansionsorgan (15, 25, 28) aufweist, wobei die Kühleinrichtung als Kompressionskälteanlage ausgebildet ist, wobei mittels der Kühleinrichtung eine Temperatur von zumindest -80°C oder niedriger an dem Wärmeübertrager ausbildbar ist, wobei das Kältemittel in dem Wärmeübertrager eine Phasenänderung durchlaufen kann, wobei der interne Wärmeübertrager zur Kühlung des Kältemittels einer Hochdruckseite (17) des Kühlkreislaufs und zur Absenkung einer Verdampfungstemperatur am Expansionsorgan nutzbar ist, wobei das Kältemittel ein zeotropes Kältemittel ist, wobei das Kältemittel nicht brennbar ist und ein relatives CO2-Äquivalent, bezogen auf 100 Jahre, von < 2500 aufweist, wobei die Kühleinrichtung eine Regeleinrichtung aufweist, mittels der das Expansionsorgan regelbar ist,
**dadurch gekennzeichnet,**
**dass** die Kühleinrichtung mit dem Kältemittel in einer flüssigen und dampfförmigen Phase wahlweise in einem ersten Betriebszustand, bei dem das Kohlenstoffdioxid auch bei der Expansion ausschließlich in der flüssigen Phase vorliegt, oder in einem zweiten Betriebszustand als Sublimationskälteanlage mit dem Kältemittel in einer zum Teil festen Phase betreibbar ist, wobei mittels der Regeleinrichtung das Expansionsorgan derart regelbar ist, dass das Kältemittel bei einer Expansion am Expansionsorgan teilweise gefrieren kann.

13. Kühleinrichtung nach Anspruch 12,
**dadurch gekennzeichnet,**
**dass** der interne Wärmeübertrager (12, 25, 47) an der Hochdruckseite (17) des Kühlkreislaufs (11, 24, 39, 44) in einer Strömungsrichtung vor dem Expansionsorgan (15, 25, 28) und nachfolgend dem Kondensator (14, 27, 38), und an einer Niederdruckseite (18) des Kühlkreislaufs in einer Strömungsrichtung vor dem Verdichter (13, 26) und nachfolgend dem Wärmeübertrager angeschlossen ist.

14. Kühleinrichtung nach Anspruch 12 oder 13,
**dadurch gekennzeichnet,**
**dass** die Regeleinrichtung zumindest einen Drucksensor und/oder zumindest einen Temperatursensor in dem Kühlkreislauf (11, 24, 39, 44) aufweist, wobei das Expansionsorgan (15, 25, 28) mittels der Regeleinrichtung in Abhängigkeit von einer gemessen Temperatur beziehungsweise eines Drucks betätigbar ist.

15. Kühleinrichtung nach einem der Ansprüche 12 bis 14,
**dadurch gekennzeichnet,**
**dass** der Kondensator (14, 27, 38) als ein Kaskaden-Wärmeübertrager (40) eines weiteren Kühlkreislaufs (36, 43) der Kühleinrichtung (10, 23, 30, 36, 43) ausgebildet ist.

16. Kühleinrichtung nach einem der Ansprüche 12 bis 15,
**dadurch gekennzeichnet,**
**dass** in dem Kühlkreislauf (24, 39, 44) ein erster Bypass (31) mit zumindest einem regelbaren zweiten Expansionsorgan (33) ausgebildet ist, wobei der erste Bypass in einer Strömungsrichtung vor dem internen Wärmeübertrager (29, 46) und nachfolgend dem Kondensator (27, 38) sowie in der Strömungsrichtung vor dem internen Wärmeübertrager und nachfolgend dem Wärmeübertrager (25, 47) an den Kühlkreislauf angeschlossen ist, wobei der erste Bypass als regelbare interne Ergänzungskühlung (34) und eine Rückeinspritzeinrichtung für Kältemittel ausgebildet ist.

17. Prüfkammer mit einer Kühleinrichtung (10, 23, 30, 36, 43) nach einem der Ansprüche 12 bis 16, wobei die Prüfkammer zur Konditionierung von Luft einen gegenüber einer Umgebung verschließbaren temperaturisolierten Prüfraum zur Aufnahme von Prüfgut und eine die Kühleinrichtung aufweisende Temperiervorrichtung zur Temperierung des Prüfraums umfasst, wobei mittels der Temperiervorrichtung eine Temperatur in einem Temperaturbereich von -80°C bis +180°C, bevorzugt -90°C bis +180°C, besonders bevorzugt -100°C bis +180°C, innerhalb des Prüfraums ausbildbar ist.

18. Prüfkammer nach Anspruch 17,
**dadurch gekennzeichnet,**
**dass** die Temperiervorrichtung eine Heizeinrichtung mit einer Heizung und einem Heiz-Wärmeübertrager in dem Prüfraum aufweist.

## Claims

1. A method for operating a cooling device (10, 23, 30, 36, 43), a temperature of at least -80 °C or lower being established at the heat exchanger by means of the cooling device having a cooling circuit (11, 24, 39, 44) comprising a refrigerant, a heat exchanger (12, 25, 47), an internal heat exchanger (19, 29, 46), a compressor (13, 26), a condenser (14, 27, 38) and a controllable expansion element (15, 25, 28) of the cooling device, the cooling device being realized as a compression refrigerating system, the refrigerant undergoing a phase transition in the heat exchanger, the refrigerant of a high-pressure side (17) of the cooling circuit being cooled by means of the internal heat exchanger, the cooling of the refrigerant of the high-pressure side by means of the internal heat exchanger being used to reduce an evaporation temperature at the expansion element, a zeotropic refrigerant being used as refrigerant, the refrigerant being nonflammable and having a relative CO2 equivalent of < 2500 over 100 years, **characterized in that**
the cooling device is operated either having the refrigerant in a liquid and vaporous phase in a first operating state, in which the carbon dioxide is, also during the expansion, only in the liquid phase, or in a second operating state as a sublimation refrigerating system having the refrigerant in a partially solid phase, in the second operating state, the expansion element being controlled by means of a control device of the cooling device in such a manner that the refrigerant partially freezes during an expansion at the expansion element.

2. The method according to claim 1,
**characterized in that**
in the cooling circuit (11, 24, 39, 44), downstream of the expansion element (15, 25, 28) and upstream of the heat exchanger (12, 25, 47), the refrigerant is formed with a homogeneous mixture of a liquid and/or gaseous phase with particles of a solid phase.

3. The method according to claim 1 or 2,
**characterized in that**
the expansion element (15, 25, 28) is controlled by means of the control device in such a manner that a pressure of 1 bar or lower is produced on a low-pressure side (18) of the cooling circuit (11, 24, 39, 44).

4. The method according to any one of the preceding claims, **characterized in that**
a refrigerant mixture composed of a mass fraction of carbon dioxide (CO₂) and a mass fraction of at least one other component is used as refrigerant.

5. The method according to claim 4,
**characterized in that**
a ratio of the components of the refrigerant remains constant in the cooling circuit (11, 24, 39, 44) at all times.

6. The method according to claim 4 or 5,
**characterized in that**
the other component has a freezing point which is below a freezing point of the carbon dioxide (CO₂) at a pressure produced in the cooling circuit (11, 24, 39, 44).

7. The method according to any one of claims 4 to 6, **characterized in that**
the mass fraction of carbon dioxide (CO₂) is 10 to 50 mass percent, preferably 30 to 50 mass percent.

8. The method according to any one of claims 4 to 7, **characterized in that**
the other component is pentafluoroethane (C₂HF₅) and/or difluoromethane (CH₂F₂).

9. The method according to any one of the preceding claims, **characterized in that**
the refrigerant partially freezes at a temperature below -75 °C and is liquid and/or gaseous at a temperature above -75 °C.

10. The method according to any one of the preceding claims,
**characterized in that**
a temperature of at least -90 °C, preferably -100 °C or lower, is established at the heat exchanger.

11. The method according to any one of the preceding claims, **characterized in that**
the refrigerant has a relative CO2 equivalent of < 1500, preferably < 500, over 100 years.

12. A cooling device (10, 23, 30, 36, 43) for conditioning air, the cooling device having a cooling circuit (11, 24, 39, 44) comprising a refrigerant, a heat exchanger (12, 25, 47), an internal heat exchanger (19, 29, 46), a compressor (13, 26), a condenser (14, 27, 38) and a controllable expansion element (15, 25, 28), the cooling device being realized as a compression refrigerating system, a temperature of at least -80 °C or lower being establishable at the heat exchanger by means of the cooling device, the refrigerant being able to undergo a phase transition in the heat exchanger, the internal heat exchanger being usable to cool the refrigerant of a high-pressure side (17) of the cooling circuit and to reduce an evaporation temperature at the expansion element, the refrigerant being a zeotropic refrigerant, the refrigerant being nonflammable and having a relative CO2 equivalent of < 2500 over 100 years, the cooling device having a control device by means of which the expansion element is controllable,
**characterized in that**
the cooling device is operable either having the refrigerant in a liquid and vaporous phase in a first operating state, in which the carbon dioxide is, also during the expansion, only in the liquid phase, or in a second operating state as a sublimation refrigerating system having the refrigerant in a partially solid phase, the expansion element being controllable by means of the control device in such a manner that the refrigerant can partially freeze during an expansion at the expansion element.

13. The cooling device according to claim 12,
**characterized in that**
the internal heat exchanger (12, 25, 47) is connected to the high-pressure side (17) of the cooling circuit (11, 24, 39, 44) upstream of the expansion element (15, 25, 28) and downstream of the condenser (14, 27, 38) and to a low-pressure side (18) of the cooling circuit upstream of the compressor (13, 26) and downstream of the heat exchanger.

14. The cooling device according to claim 12 or 13,
**characterized in that**
the control device has at least one pressure sensor and/or at least one temperature sensor in the cooling circuit (11, 24, 39, 44), the expansion element (15, 25, 28) being actuable by means of the control device as a function of a measured temperature and/or a pressure.

15. The cooling device according to any one of claims 12 to 14,
**characterized in that**
the condenser (14, 27, 38) is realized as a cascade heat exchanger (40) of another cooling circuit (36, 43) of the cooling device (10, 23, 30, 36, 43).

16. The cooling device according to any one of claims 12 to 15,
**characterized in that**
a first bypass (31) having at least one controllable second expansion element (33) is realized in the cooling circuit (24, 39, 44), the first bypass being connected to the cooling circuit upstream of the internal heat exchanger (29, 46) and downstream of the condenser (27, 38) and upstream of the internal heat exchanger and downstream of the heat exchanger (25, 47), the first bypass being realized as a controllable internal additional cooling system (34) and a re-injection device for refrigerant.

17. A test chamber having a cooling device (10, 23, 30, 36, 43) according to any one of claims 12 to 16, the test chamber comprising for conditioning air a test space which can be sealed against an environment and is temperature-insulated and which serves to receive test material, and a temperature control device which comprises the cooling device and serves to control the temperature of the test space, a temperature in a temperature range of -80 °C to +180 °C, preferably -90 °C to +180 °C, especially preferably -100 °C to +180 °C, being establishable within the test space by means of the temperature control device.

18. The test chamber according to claim 17,
**characterized in that**
the temperature control device comprises a heating device having a heater and a heating heat exchanger in the test space.

## Revendications

1. Procédé pour faire fonctionner un moyen de refroidissement (10, 23, 30, 36, 43), une température d'au moins -80°C ou moins étant établie à l'échangeur de chaleur au moyen du moyen de refroidissement ayant un circuit de refroidissement (11, 24, 39,44) comprenant un fluide frigorigène, un échangeur de chaleur (12, 25, 47), un échangeur de chaleur (19, 29, 46) interne, un compresseur (13, 26), un condenseur (14, 27, 38) et un élément de détente (15, 25, 28) réglable du moyen de refroidissement, le moyen de refroidissement étant réalisé comme système frigorifique à compression, le fluide frigorigène subissant une transition de phase dans l'échangeur de chaleur, le fluide frigorigène d'un côté haute pression (17) du circuit de refroidissement étant refroidi au moyen de l'échangeur de chaleur interne, le refroidissement du fluide frigorigène du côté haute pression au moyen de l'échangeur de chaleur interne étant utilisé pour réduire une température d'évaporation à l'élément de détente, un fluide frigorigène zéotropique étant utilisé comme fluide frigorigène, le fluide frigorigène étant ininflammable et ayant un équivalent CO2 relatif de < 2500 sur 100 ans,
**caractérisé en ce que**
le moyen de refroidissement fonctionne soit ayant le fluide frigorigène dans une phase liquide et de vapeur dans un premier état de fonctionnement, dans lequel le dioxyde de carbone est, aussi pendant la détente, seulement dans la phase liquide, soit dans un deuxième état de fonctionnement comme système frigorifique à sublimation ayant le fluide frigorigène dans une phase qui est partiellement solide, dans le deuxième état de fonctionnement, l'élément de détente étant réglé au moyen d'un moyen de réglage du moyen de refroidissement de manière que le fluide frigorigène gèle partiellement pendant une détente à l'élément de détente.

2. Procédé selon la revendication 1,
**caractérisé en ce que**
dans le circuit de refroidissement (11, 24, 39, 44) dans une direction d'écoulement en aval de l'élément de détente (15, 25, 28) et en amont de l'échangeur de chaleur (12, 25, 47), le fluide frigorigène est formé avec un mélange homogène d'une phase liquide et/ou gazeuse avec de particules d'une phase solide.

3. Procédé selon la revendication 1 ou 2,
**caractérisé en ce que**
l'élément de détente (15, 25, 28) est réglé au moyen du moyen de réglage de manière qu'une pression de 1 bar ou moins est formée d'un côté basse pression (18) du circuit de refroidissement (11, 24, 39, 44).

4. Procédé selon l'une quelconque des revendications précédentes, **caractérisé en ce**
**qu'**un mélange de fluides frigorigènes composé d'une fraction massique de dioxyde de carbone (CO₂) et d'une fraction massique d'au moins un autre composant est utilisé comme fluide frigorigène.

5. Procédé selon la revendication 4,
**caractérisé en ce**
**qu'**un rapport des composants du fluide frigorigène reste toujours constant dans le circuit de refroidissement (11, 24, 39, 44).

6. Procédé selon la revendication 4 ou 5,
**caractérisé en ce que**
l'autre composant a un point de congélation qui est inférieur au point de congélation du dioxyde de carbone (CO₂) à une pression formée dans le circuit de refroidissement (11, 24, 39, 44).

7. Procédé selon l'une quelconque des revendications 4 à 6, **caractérisé en ce que**
la fraction massique de dioxyde de carbone (CO₂) est de 10 à 50 pour cents en masse, de préférence de 30 à 50 pour cents en masse.

8. Procédé selon l'une quelconque des revendications 4 à 7, **caractérisé en ce que**
l'autre composant est du pentafluoroéthane (C₂HF₅) et/ou du difluorométhane (CH₂F₂).

9. Procédé selon l'une quelconque des revendications précédentes, **caractérisé en ce que**
le fluide frigorigène gèle partiellement à une température inférieure à -75°C et est liquide et/ou gazeux à une température supérieure à - 75°C.

10. Procédé selon l'une quelconque des revendications précédentes, **caractérisé en ce**
**qu'**une température d'au moins -90°C, de préférence -100°C ou moins, est établie à l'échangeur de chaleur.

11. Procédé selon l'une quelconque des revendications précédentes, **caractérisé en ce que**
le fluide frigorigène a un équivalent CO2 relatif de < 1500, de préférence de < 500, sur 100 ans.

12. Moyen de refroidissement (10, 23, 30, 36, 43) pour le conditionnement d'air, le moyen de refroidissement ayant un circuit de refroidissement (11, 24, 39, 44) comprenant un fluide frigorigène, un échangeur de chaleur (12, 25, 47), un échangeur de chaleur (19, 29, 46) interne, un compresseur (13, 26), un condenseur (14, 27, 38) et un élément de détente (15, 25, 28) réglable, le moyen de refroidissement étant réalisé comme système frigorifique à compression, une température d'au moins -80°C ou moins étant capable d'être établie à l'échangeur de chaleur au moyen du moyen de refroidissement, le fluide frigorigène étant capable de subir une transition de phase dans l'échangeur de chaleur, l'échangeur de chaleur interne étant utilisable pour refroidir le fluide frigorigène d'un côté haute pression (17) du circuit de refroidissement et pour réduire une température d'évaporation à l'élément de détente, le fluide frigorigène étant un fluide frigorigène zéotropique, le fluide frigorigène étant ininflammable et ayant un équivalent CO2 relatif de < 2500 sur 100 ans, le moyen de refroidissement ayant un moyen de réglage au moyen duquel l'élément de détente est réglable, **caractérisé en ce que**
le moyen de refroidissement est capable de fonctionner soit ayant le fluide frigorigène dans une phase liquide et de vapeur dans un premier état de fonctionnement, dans lequel le dioxyde de carbone est, aussi pendant la détente, seulement dans la phase liquide, soit dans un deuxième état de fonctionnement comme système frigorifique à sublimation ayant le fluide frigorigène dans une phase qui est partiellement solide, dans le deuxième état de fonctionnement, l'élément de détente étant réglable au moyen du moyen de réglage de manière que le fluide frigorigène est capable de geler partiellement pendant une détente à l'élément de détente.

13. Moyen de refroidissement selon la revendication 12,
**caractérisé en ce que**
l'échangeur de chaleur (12, 25, 47) interne est relié au côté (17) haute pression du circuit de refroidissement (11, 24, 39, 44) dans la direction d'écoulement en amont de l'élément de détente (15, 25, 28) et en aval du condenseur (14, 27, 38) et au côté (18) basse pression du circuit de refroidissement dans la direction d'écoulement en amont du compresseur (13, 26) et en aval de l'échangeur de chaleur.

14. Moyen de refroidissement selon la revendication 12 ou 13, **caractérisé en ce que**
le moyen de réglage a au moins un capteur de pression et/ou au moins un capteur de température dans le circuit de refroidissement (11, 24, 39, 44), l'élément de détente (15, 25, 28) étant actionnable au moyen du moyen de réglage en fonction d'une température et/ou pression mesurées.

15. Moyen de refroidissement selon l'une quelconque des revendications 12 à 14,
**caractérisé en ce que**
le condenseur (14, 27, 38) est réalisé comme échangeur de chaleur (40) en cascade d'un autre circuit de refroidissement (36, 43) du moyen de refroidissement (10, 23, 30, 36, 43).

16. Moyen de refroidissement selon l'une quelconque des revendications 12 à 15,
**caractérisé en ce**
**qu'**un premier bipasse (31) ayant au moins un deuxième élément de détente (33) réglable est réalisé dans le circuit de refroidissement (24, 39, 44), le premier bipasse étant relié au circuit de refroidissement dans la direction d'écoulement en amont de l'échangeur de chaleur (29, 46) interne et en aval du condenseur (27, 38) et dans la direction d'écoulement en amont de l'échangeur de chaleur interne et en aval de l'échangeur de chaleur (25, 47), le premier bipasse étant réalisé comme refroidissement supplémentaire (34) interne réglable et moyen de réinjection pour du fluide frigorigène.

17. Chambre d'essai ayant un moyen de refroidissement (10, 23, 30, 36, 43) selon l'une quelconque des revendications 12 à 16, ladite chambre d'essai comprenant, pour le conditionnement d'air, un espace d'essai isolé thermiquement qui est capable d'être étanché à un environnement et qui sert à recevoir du matériau d'essai et un dispositif de régulation de température qui a le moyen de refroidissement et sert à réguler la température de l'espace d'essai, le dispositif de régulation de température ayant le moyen de refroidissement, une température dans une plage de température de -80 °C à +180 °C, de préférence de -90 °C à +180 °C, de manière particulièrement préférée de -100 °C à +180 °C, étant capable d'être établie à l'intérieur de l'espace d'essai au moyen du dispositif de régulation de température.

18. Chambre d'essai selon la revendication 17,
**caractérisé en ce que**
le dispositif de régulation de température a un moyen chauffant ayant un chauffage et un échangeur de chaleur chauffant dans l'espace d'essai.
